# EUROPEAN PATENT SPECIFICATION

(11) **EP 3 917 322 B1**
(45) Date of publication and mention of the grant of the patent: **03.08.2022**
(21) Application number: 20702311.0
(22) Date of filing: 03.02.2020
(51) Int. Cl.: A21C 1/00, A21C 1/02, A21C 1/14, A21D 8/02, A21D 13/06

(54) **DOUGH MAKING APPARATUS AND METHOD**
TEIGHERSTELLUNGSVORRICHTUNG UND -VERFAHREN
APPAREIL ET PROCÉDÉ DE PRODUCTION DE PÂTE

(30) Priority: 03.02.2019 WO PCT/CN2019/074694; 01.08.2019 EP 19189647
(43) Date of publication of application: 08.12.2021
(73) Proprietor: Koninklijke Philips N.V., 5656 AG Eindhoven (NL)
(72) Inventor: KUI, Xiao, Yun, 5656 AE Eindhoven (NL); SU, Guangming, 5656 AE Eindhoven (NL); LI, Ming, 5656 AE Eindhoven (NL)
(74) Representative: de Vries, Janna
(86) International application number: PCT/EP2020/052634
(87) International publication number: WO 2020/157336

(56) References cited:
- WO-A1-2016/116543
- CN-A- 104 664 233
- DE-A1-102010 064 113

## Description

### FIELD OF THE INVENTION

The present invention relates to a dough making apparatus comprising a kneading chamber including a kneading arm driven by a motor and a controller arranged to control said motor.

The present invention further relates to a method of preparing dough with such a kitchen appliance.

### BACKGROUND OF THE INVENTION

Obesity is rapidly becoming one of the most challenging medical conditions in modern society. Obesity-related illnesses such as Type 2 diabetes reduce quality of life as well as life expectancy and create serious pressure on healthcare providers, both in terms of cost of management such illnesses and the amount of time required to treat patients suffering from such illnesses.

For example, Type 2 diabetes patients suffer from compromised glycemic responses to carbohydrate intake, which means that blood sugar levels in such patients are poorly controlled after meals containing carbohydrates. Consequently, there is an increasing interest in preventing individuals from attracting Type 2 diabetes or entering a prediabetic state. It is well-known that weight control of such individuals is an important factor in preventing the development of Type 2 diabetes or such a prediabetic state. Such weight control may be aided by reducing the carbohydrate intake of such individuals.
To this end, dough-based food products are available on the market in which the carbohydrate content has been lowered, such as low-carb pastas for example. However, many of such products are not universally liked due to their noticeably different taste to conventional full-carb pastas, due to the reduced amount or even absence of wheat flour in such pastas. Moreover, some consumers have concerns about the safety of such food products due to the amounts of additives therein.

In order to achieve fresh dough-based products that have excellent taste, many consumers produce such products at home in a dough processing apparatus, such as a bread maker, pasta maker and so on. However, such kitchen appliances typically do not facilitate the production of dough having reduced carbohydrate content from a conventional wheat-based flour. It is known per se to reduce the starch content of dough. Several industrial processes exist in which the starch content of such dough is reduced.

For example, CN104664233A discloses a processing method of a potato cold noodle. The potato cold noodle is prepared from the following components in parts by weight: 28-54 parts of wheat flour, 18-42 parts of whole potato powder, 8-32 parts of potato starch and 8-12 parts of maltodextrin. The processing method comprises the following steps: mixing the wheat flour with an appropriate amount of water and kneading to obtain dough, ageing the dough at 18-33°C for 1-2 hours and then washing out the gluten, standing the obtained paste water for 6-8 hours for layering, taking the lower-layer precipitate to obtain paste, mixing the whole potato powder, the potato starch and the maltodextrin with the obtained paste to obtain mixed paste, adding 0.5-5% of yeast powder to the mixed paste and fermenting at 30-40°C for 5-8 hours; and spreading the fermented mixed paste and steaming for 2-5 minutes until the mixed paste is transparent, thereby obtaining the potato cold noodle.

However, such a process is not particularly suited for deployment in a kitchen appliance, due to the length of the process for example. Moreover, for a typical dough making apparatus, the user may desire a degree of flexibility in the consistency of the dough to be formed, e.g. to facilitate the production of different types of dough with the kitchen appliance. CN108991219 discloses a dough making apparatus and method according to the preamble of claim 1 and 12 respectively.

### SUMMARY OF THE INVENTION

The present invention seeks to provide a dough making apparatus that can produce dough having a reduced starch content with a user-specified consistency.

The present invention further seeks to provide a method of preparing dough having a reduced starch content with such a kitchen appliance.

According to an aspect, there is provided a dough making apparatus according to claim 1, comprising a kneading chamber including a controllable water outlet and a kneading arm driven by a motor; a controller arranged to control said motor and water outlet; a weight sensor coupled to the controller for determining the weight of the contents of the kneading chamber; and a user interface communicatively coupled to the controller, wherein the controller is adapted to receive a user input with the user interface indicative of a desired moisture content of a dough to be made; detect the weight of an amount of flour added to the kneading chamber with said weight sensor; calculate a target weight of said dough based on its desired moisture content from the detected actual weight of said flour and an estimated reduction in the starch content of said flour caused by washing said dough with an additional amount of water; control said motor to engage the kneading arm such as to form a dough from the mixture of said amount of flour and an amount of water added to said kneading chamber and subsequently wash the dough with the additional amount of water added to the kneading chamber to reduce its starch content; control the controllable water outlet to drain excess water comprising said starch from the kneading chamber after said washing to leave behind the washed dough in the kneading chamber and detect the actual weight of the washed dough with the weight sensor during said draining; if said actual weight of the washed dough reaches the target weight, end the draining; and subsequently control said motor to engage the kneading arm to finalize the dough.

The present invention is based on the insight that a user may define a target moisture content of a desired dough, for example directly or indirectly, e.g. by selecting a type of dough with the user interface for which a target moisture content is programmed into the dough making apparatus. By weighing the amount of flour that is added to the kneading chamber, the controller can accurately calculate the target weight of the dough after it has been washed in order to remove a fraction of starch from the dough due to the fact that the weight of this fraction can be accurately predicted, in particular when a well-defined additional amount of water is used to wash the dough. This calculated target weight of the washed dough may be used by the controller to determine whether the finalized dough in the dough making apparatus has reached the desired consistency or moisture content by weighing the washed dough during the draining of excess water from the kneading chamber, as the weight of the washed dough should match the calculated target weight of the dough. In this manner, the dough making apparatus can produce dough having a reduced starch content with the desired consistency or moisture content.

In an example embodiment, the controller is adapted to calculate the target weight of the dough using an algorithm of the form Y = (D1 - X1 + S0^{∗}X1 + C^{∗}X1) /D1, in which Y is the desired moisture content, D1 is the target weight, X1 is the detected actual weight of the amount of flour, SO is an estimated fraction of starch removed from said flour by said washing and C is the moisture content of said flour.

In a preferred embodiment, the controller is further adapted to, if the actual weight of the washed dough is larger than the target weight, calculate a further amount of flour to be added to the washed dough; generate a user instruction with the user interface instructing the user to add the further amount of flour to the kneading chamber; and control said motor to engage the kneading arm to finalize the dough by kneading the further amount of flour into the dough. This embodiment is based on the insight that when the actual weight of the washed dough at the end of the draining process exceeds its target weight, the moisture content of the washed dough is too high. In such a scenario, the moisture content may be reduced by adding some more flour to the washed dough, with the actual amount of additional flour to be calculated from the difference between the target weight and actual weight of the washed dough.

In an example embodiment, the controller is adapted to calculate the further amount of flour using an algorithm of the form Y = (D2 - X1 + S0^{∗}X1 + C^{∗}(X1+X2)) /(D2+X2), in which Y is the desired moisture content, D2 is the actual weight of the washed dough, X1 is the detected actual weight of the amount of flour, X2 is the weight of the calculated further amount of flour, SO is an estimated fraction of starch removed from said flour during said washing and C is the moisture content of said flour.

The controller may be further adapted to calculate the amount of water forming the dough based on the detected actual weight of amount of flour, wherein the weight of the calculated amount of water is 0.4-2.0 times the detected actual weight of amount of flour, preferably wherein the weight of the calculated amount of water is 0.5-0.8 times the detected actual weight of the amount of flour; and generate a user instruction with the user interface to instruct a user to add the calculated amount of water to the kneading chamber. By also calculating the amount of water to be added to the flour in the kneading chamber, the user of the dough making apparatus is further assisted in ensuring that the user adds the flour and water in the correct ratios in accordance with the desired consistency or moisture content of the dough.

The controller may be further adapted to calculate the additional amount of water based on the detected actual weight of amount of flour, wherein the weight of the additional amount of water is 1.0-5.0 times the detected actual weight of the amount of flour, preferably wherein the weight of the additional amount of water is 2.0-4.0 times the detected actual weight of the amount of flour; and generate a user instruction with the user interface to instruct a user to add the calculated additional amount of water to the kneading chamber. This assists the user in ensuring that the targeted amount of starch is removed from the dough in the dough making apparatus during the washing step.

The controller may be further adapted to receive a user input with the user interface indicative of a desired weight of a dough to be made; calculate an amount of said flour to be added using an algorithm of the form Y = (D - X + S0^{∗}X + C^{∗}X) /D, in which Y is the desired moisture content, D is the desired weight of dough, X is the weight of the amount of flour to be added, SO is an estimated fraction of starch removed from said flour and C is the moisture content of said flour; and generate a user instruction with the user interface to instruct a user to add the calculated amount of flour to the kneading chamber. This assists the user in ensuring that the desired amount of dough is produced with the dough making apparatus.

The controller may be adapted to control said motor to engage the kneading arm to wash the dough with the additional amount of water for a period of 1-20 minutes, preferably for a period of 5-10 minutes. When the dough is washed for this period of time, the desired reduction in its starch content can be effectively achieved.
The controller may be adapted to control said motor to engage the kneading arm to finalize the dough for a period of 1-15 minutes, preferably for a period of 1-5 minutes. It has been found that kneading the washed dough for such a period particularly ensures that the finalized dough has the desired consistency.

In an embodiment, the dough making apparatus further comprises a data storage device communicatively coupled to the controller, said data storage device storing a list of types of dough and a desired moisture content for each of the listed types of dough, wherein the user interface comprises a plurality of selection options, each selection option corresponding to one of said types of dough; and the controller is adapted to access the data storage device to retrieve the desired moisture content of a type of dough selected by a user from the plurality of selection options. This has the advantage that the user does not have to explicitly specify the desired moisture content of the dough, which improves the user friendliness of the dough making apparatus as many users may not know the exact moisture content of the dough desired by them.

In a particularly advantageous embodiment, the dough making apparatus further comprises a controllable water inlet into the kneading chamber under control of the controller, wherein the controller is further adapted to generate a water inlet control instruction to cause the adding of the amount of water and/or the additional amount of water to the kneading chamber. The automation of the addition of the amount of water and/or the additional amount of water to the kneading chamber may improve the accuracy of the dough making process with the dough making apparatus, as user error in adding the incorrect amount of water to the kneading chamber can be avoided with such an automated process.

To this end, the dough making apparatus may further comprise a first water tank in fluid communication with the controllable water inlet and a second water tank in fluid communication with the controllable water outlet. This has the advantage that the dough making apparatus may operate as a standalone device rather than having to be connected to a water supply and drains.

The dough making apparatus may further comprise an extruder in fluid communication with the kneading chamber under control of said controller, wherein the controller is adapted to extrude a finalized dough with the extruder. In this manner, the dough may be shaped with the extruder in any suitable shape, e.g. a pasta shape or noodle shape or the like.

According to another aspect, according to claim 12, there is provided a method of preparing dough having a reduced starch content with a kitchen appliance comprising a kneading chamber including a kneading arm driven by a motor, the method comprising receiving a user input with the kitchen appliance indicative of a desired moisture content of a dough to be made;
determining the weight of an amount of flour added to the kneading chamber; calculating a target weight of said dough based on its desired moisture content from the determined weight of said flour and an estimated reduction in the starch content of said flour caused by washing said dough with an additional amount of water; controlling said motor to engage the kneading arm such as to form a dough from the mixture of said amount of flour and an amount of water added to said kneading chamber; washing the dough with the additional amount of water added to the kneading chamber to reduce its starch content; draining excess water comprising said starch from the kneading chamber after said washing to leave behind the washed dough in the kneading chamber and determining the actual weight of the washed dough during said draining, and if said actual weight matches the target weight, controlling said motor to engage the kneading arm to finalize the dough.

With such a method deployed by a kitchen appliance such as a dough making apparatus, dough having a reduced carbohydrate, i.e. starch, content can be produced without compromising the desired consistency or moisture content of the dough, as explained in more detail above.

Preferably, said calculating the target weight of the dough comprises using an algorithm of the form Y = (D1 - X1 + S0^{∗}X1 + C^{∗}X1) /D1, in which Y is the desired moisture content, D1 is the target weight, X1 is the weight of the amount of flour, SO is an estimated fraction of starch removed from said flour and C is the moisture content of said flour.

In a specific embodiment, the method further comprises calculating a further amount of flour to be added to the washed dough; generating a user instruction with the user interface instructing the user to add the further amount of flour to the kneading chamber; and controlling said motor to engage the kneading arm to finalize the dough by kneading the further amount of flour into the dough if the actual weight of the washed dough is larger than the target weight. This ensures that the final dough has the desired consistency or moisture content as well as a reduced starch content. To this end, the step of calculating the further amount of flour may comprise using an algorithm of the form Y = (D2 - X1 + S0^{∗}X1 + C^{∗}(X1+X2)) /(D2+X2), in which Y is the desired moisture content, D2 is the actual weight of the washed dough, X1 is the detected actual weight of the amount of flour, X2 is the weight of the calculated further amount of flour, SO is an estimated fraction of starch removed from said flour and C is the moisture content of said flour.

### BRIEF DESCRIPTION OF THE DRAWINGS

Embodiments of the invention are described in more detail and by way of nonlimiting examples with reference to the accompanying drawings, wherein:
FIG. 1 schematically depicts a cross-sectional view of a dough making apparatus according to an embodiment;
FIG. 2 is a flowchart of a method of preparing dough having a reduced starch content with such a kitchen appliance according to an example embodiment;
FIG. 3 is a graph depicting an achieved reduction of starch content in dough with the method of FIG. 2;
FIG. 4 schematically depicts a cross-sectional view of a dough making apparatus according to another embodiment;
FIG. 5 schematically depicts a cross-sectional view of a dough making apparatus according to yet another embodiment; and
FIG. 6 schematically depicts a cross-sectional view of a dough making apparatus according to still another embodiment.

### DETAILED DESCRIPTION OF THE EMBODIMENTS

It should be understood that the Figures are merely schematic and are not drawn to scale. It should also be understood that the same reference numerals are used throughout the Figures to indicate the same or similar parts.

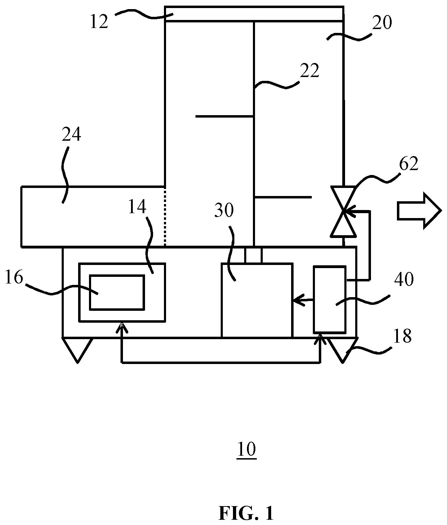

FIG. 1 schematically depicts a cross-sectional view of a dough making apparatus 10 according to an embodiment. The dough making apparatus 10 comprises a kneading chamber 20 covered by a lid 12, which may take any suitable shape. The kneading chamber 20 houses a kneading arm 22 driven by a motor 30. The design of the kneading arm 22 is not particularly critical and it should be understood that the kneading arm 22 may take any suitable shape and may be made of any suitable material or combinations of materials. The motor 30 preferably is housed outside the kneading chamber 20, such as in the bottom or floor of the dough making apparatus 10. The kneading chamber 20 further comprises a controllable valve 62 for draining fluids such as water from the kneading chamber 20. The controllable valve 62 may be controlled such as to switch between a closed position in which fluids cannot escape from the kneading chamber 20 through the valve 62 and an open position in which fluids can be drained from the kneading chamber 20 through the valve 62 as indicated by the block arrow pointing away from the valve 62. A controller 40 is also present, which is arranged to control the motor 30 and the controllable valve 62. The controller 40 may take any suitable shape, such as a microcontroller, a suitably programmed processor or the like, and may be located within the dough processing apparatus 10 in any suitable location, such as the floor or the lid 12 of the dough processing apparatus 10.

The dough processing apparatus 10 further comprises a weight sensor 18 arranged to weigh the contents of the kneading chamber 20. The weight sensor 18 is communicatively coupled to the controller 40 such as to provide the controller 40 with the sensed weight of the contents of the kneading chamber 20. The weight sensor 18 may take any suitable shape and may be located in any suitable location within the dough processing apparatus 10, such as in the feet of the dough processing apparatus 10. Other suitable locations will be immediately apparent to the skilled person.

The dough processing apparatus 10 further comprises a user interface 14 communicatively coupled to the controller 40. For example, the controller 40 may be arranged to control the user interface 14 and to receive user instructions for operation of the dough processing apparatus 10 through the user interface 14. The user interface 14 may take any suitable shape. For example, the user interface 14 may comprise one or more of a set of buttons, dials, levers, a touch screen 16 and so on through which a user may control the dough processing apparatus 10. The user interface 14 may be located at any suitable part of the dough processing apparatus 10, such as in its lid 12 or on its body for example.

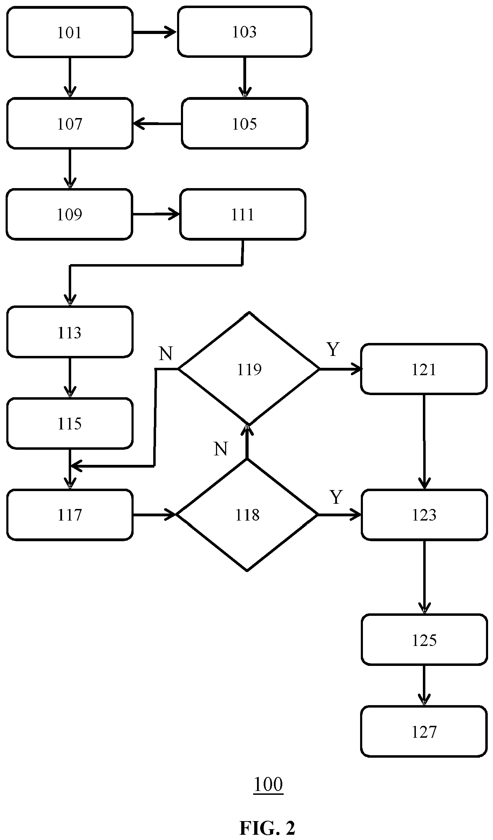

The dough processing apparatus may further comprise an extruder 24 in fluid communication with the kneading chamber 20 under control of the controller 40. Such an extruder 24 may be used to shape completed dough produced in the kneading chamber 20, for example to generate pasta shapes, noodle shapes and so on. To this end, the extruder may comprise a set of wheels or the like that grab the completed dough and drive the dough from the kneading chamber 20 through the extruder 24. Of course, many other suitable implementations of such an extruder 24 will be immediately apparent to the skilled person. In accordance with embodiments of the present invention, the dough processing apparatus 10 is configured to produce dough having a reduced starch content, that is, in which a fraction of the starch in flour used to produce the dough with the dough processing apparatus 10 is reduced from the dough during its kneading. To this end, the dough processing apparatus 10 is adapted to deploy a washing cycle of the dough during its kneading such that a fraction of the starch in the flour used to form the dough is removed therefrom, with the controller 40 being adapted to estimate the weight of this fraction such that the moisture content of the washed dough can be accurately determined from the weight of the washed dough and the weight of the amount of flour used to form the dough as determined with the weight sensor 18. In this manner, dough may be produced that has a reduced starch content whilst at the same time having the desired moisture content as specified by a user through the user interface 14. This will be explained in more detail with the aid of FIG. 2, which depicts a flowchart of an example embodiment of a method 100 of reducing the starch content of dough produced with the dough making apparatus 10. In other words, the dough making apparatus 10 is configured, and more specifically the controller 40 of the dough making apparatus 10 is configured to implement the method 100 in example embodiments of the present invention.

The method 100 starts in operation 101 in which the dough making apparatus 10 is engaged, e.g. switched on. This may involve a user interacting with the user interface 14 of the dough making apparatus 10, for instance to specify a desired type of dough or a desired moisture content of the dough to be formed with the dough making apparatus 10 in operation 103. In case of the user specifying a desired type of dough, the controller 40 may access a data storage device (not shown) forming part of the dough making apparatus 10 such as a lookup table stored in memory or the like, which data storage device stores a target moisture content for the different types of dough a user can select through the user interface 14. The user subsequently adds an amount of flour to the kneading chamber 20, which is weighed with the weight sensor 18 in operation 105, which determined weight is forwarded to the controller 40 for the calculation of the target weight D1 of the dough to be formed in operation 107. The controller 40 may further control the user interface 14 such as to display (e.g. on the touch screen 16 or any other suitable type of display) the amount of flour added to the kneading chamber 20 by the user. This for example may be beneficial for a user to determine the appropriate amount of water to be added to the kneading chamber 20 in order to form the desired type of dough.

In an embodiment, the controller 40 may calculate the target weight D1 using an algorithm of the form: Y = (D1 - X1 + S0^{∗}X1 + C^{∗}X1) /D1, in which Y is the desired moisture content of the selected type of dough, D1 is the target weight of the selected type of dough, X1 is the detected actual weight of the amount of flour as determined with the weight sensor 18, SO is an estimated fraction of starch to be removed from the flour after the dough has been kneaded in a washing step of the kneaded dough and C is the moisture content of said flour. The parameters SO and C may be considered constants, which may be stored within the controller 40 or within the previously mentioned data storage device. In particular, the parameter C may be treated as a constant because for a particular type of flour the moisture content of the flour typically shows negligible variation between different batches of the flour, whereas the parameter SO may be treated as a constant as long as different batches of the kneaded dough are washed with comparable amounts of water, such that the amount of starch being washed from the kneaded dough between these batches is largely constant. Because X1 is determined and Y is given, the only variable in this equation is D1, such that the controller 40 can calculate D1 with this algorithm.

Alternatively or additionally, the user may specify a target weight D of the desired type of dough, from which the controller 40 may calculate the amount of flour the user should add to the kneading chamber 20 to achieve this target weight, based on the target moisture content of the selected type of dough and the fraction of starch predicted to be removed from the dough in a washing step of the dough under preparation within the dough making apparatus 10 as will be explained in more detail below. In this case, the controller 40 may control the user interface 14 to generate a user instruction with the user interface 14 instructing the user to add the calculated amount of flour to the kneading chamber 20. The weight sensor 18 in this case may be used to determine the actual weight of the amount of flour added to the kneading chamber and forward the determined actual weight to the controller 40 such that the controller 40 can control the user interface 14 such as to indicate to the user whether a sufficient amount of flour has been added to the kneading chamber 20 by the user 20.

In an embodiment, the controller 40 may calculate the amount of flour to be added to the kneading chamber 20 by the user using an algorithm of the form: form Y = (D - X + S0^{∗}X + C^{∗}X) /D, in which Y is the desired moisture content of the type of dough, D is the desired weight of the dough, X is the weight of the amount of flour to be added to the kneading chamber 20 in order to achieve D with the given moisture content Y, SO is an estimated fraction of starch removed from the flour when the kneaded dough is washed with an additional amount of water to reduce its starch content and C is the moisture content of the flour. As previously explained, SO and C may be treated as constants such that the only variable in this equation is X (as Y and D are given), such that the controller 40 can calculate the amount X of flour to be added to the kneading chamber 20 using this algorithm.
In operation 109, the dough making apparatus 10 receives the appropriate amount of water in the kneading chamber 20. This may be achieved in a number of ways. For instance, the appropriate amount of water may be determined by the user or alternatively the appropriate amount of water may be calculated by the controller 40 based on the actual amount of flour that has been added to the kneading chamber 20 as determined with the weight sensor 18. In the latter case, the controller 40 may control the user interface 14 to generate a user instruction instructing the user to add the calculated amount of water to the kneading chamber 20. The weight sensor 18 may be used to check if the correct amount of water is added to the kneading chamber 18 by weighing the amount of water and forwarding the weighing result to the controller 40 to allow the controller 40 to operate the user interface 14 to inform the user whether the appropriate amount of water has been added to the kneading chamber 20. In yet another embodiment, which will be described in further detail below, the dough making apparatus 10 may comprise a water inlet under control of the controller 40, which water inlet may be fluidly connected to a water tank or a mains water supply such that the controller 40 can ensure that the correct amount of water is added to the kneading chamber 20 through operation of the water inlet.

In an embodiment, the controller 40 may calculate the appropriate amount of water based on the amount of flour added to the kneading chamber 20 such that the weight of the calculated amount of water is 0.4-2.0 times the detected actual weight of amount of flour, preferably such that the weight of the calculated amount of water is 0.5-0.8 times the detected actual weight of the amount of flour. It has been found that if the amount of water is chosen within this range relative to the weight of the amount of flour added to the kneading chamber 20, dough with a good consistency is achieved with the dough making apparatus 10. The method 100 subsequently proceeds to operation 111 in which the flour and water added to the kneading chamber 20 are kneaded to a dough. To this end, the controller 40 controls the motor 30 to drive the kneading arm 22 during this kneading process. For example, the kneading process of operation 111 may be performed for a duration of 5-10 minutes.
Upon completion of the kneading process in operation 111, the method 100 proceeds to operation 113 in which an additional amount of water for washing the kneaded dough is received in the kneading chamber 20. As previously explained, the controller 40 may generate a user instruction with the user interface 14 to instruct a user to add the appropriate additional amount of water to the kneading chamber 20 or alternatively the controller 40 may operate a water inlet valve within the kneading chamber 20 to add the appropriate additional amount of water to the kneading chamber 20. The appropriate additional amount of water may be calculated by the controller 40 based on the determined weight of flour added to the kneading chamber 20 as determined in operation 105. Preferably, the weight of the additional amount of water is 1.0-5.0 times the detected actual weight of the amount of flour, more preferably the weight of the additional amount of water is 2.0-4.0 times the detected actual weight of the amount of flour in order to remove the estimated amount of starch SO from the kneaded dough by washing it with the additional amount of water in operation 115.

In operation 115, the kneaded dough is washed with the additional amount of water, preferably by the controller 40 activating the motor 30 of the kneading arm 22 during a defined period of time such that the additional amount of water is effectively mixed with the kneaded dough. The defined period of time may be a period of 1-20 minutes and preferably is a period of time of 5-10 minutes. As will be understood by the skilled person, during this washing step, part of the starch in the flour used to form the dough is dissolved by the additional amount of water, which part has previously been estimated by the controller 40, e.g. as the fraction SO in the aforementioned algorithms.

Upon completion of operation 115, the method 100 proceeds to operation 117 in which the controller 40 opens the outlet valve 62 such that excess water in the kneading chamber can be drained away by gravity. During this draining process, the weight sensor 18 periodically or continuously weighs the contents of the kneading chamber 20 and forwards the weighing results to the controller 40. The controller 40 checks in operation 118 if the actual weight D2 of the contents of the kneading chamber 20 equals the calculated target weight D1 (or the user-specified target weight D) of the dough to be formed. If D2 equals D1 (or D), this means that the contents of the kneading chamber 20 constitute the dough having the desired moisture content Y, such that the controller 40 can shut the outlet valve 62 and proceed to operation 123 in which the dough is finalized. The finalizing of the dough in operation 123 typically involves the controller 40 activating the motor 30 of the kneading arm 22 such that the dough is kneaded for a further period of time with the kneading arm 22 in order to finalize it. In an embodiment, the further period of time is 1-15 minutes and preferably is 1-5 minutes in order to achieve a finalized dough with the desired consistency.

On the other hand, if the controller 40 determines in operation 118 that D2 is larger than D1 (or D), the controller 40 may check in operation 119 if D2 is still changing, i.e. reducing, for example by comparing the actual value of D2 with the previous value of D2 as determined with the weight sensor 18. In other words, the controller 40 may check if excess water is still being drained from the kneading chamber 20 through the outlet valve 62. If this is indeed the case, the method 100 may revert back to previously described operation 117. However, if D2 has become constant or if the rate of change to D2 has fallen below a defined threshold, the controller 40 may conclude that insufficient water can be drained from the kneading chamber 20 in order to achieve the desired situation in which D2 equals D1 or D. In other words, in a scenario in which at the end of the draining process D2 > D1 (or D), the actual moisture content Y^{∗} of the residual dough in the kneading chamber 20 is too high, i.e. Y^{∗}>Y, such that additional measures are required to lower the actual moisture content Y^{∗} of the dough such that Y^{∗} equals Y.

To this end, the dough making apparatus 10 may comprise a heating element (not shown) thermally coupled to the kneading chamber 20 under control of the controller 40 and/or the kneading chamber 20 may comprise a centrifuge (not shown) controlled by the controller 40, which may be engaged at the end of operation 117 in order to further reduce the moisture content of the residual dough, e.g. by heating and/or centrifuging, in order to ensure that its final moisture content equals the moisture content as defined by the user in operation 103. Such additional processing of the dough may be monitored with the weight sensor 18 in order to facilitate termination of the additional processing at the appropriate point in time, i.e. when D2 = D1 (or D).

However, such additional processing capability within the dough making apparatus 10 requires additional or more complex components, which increases the cost of the dough making apparatus 10. Therefore, in a preferred alternative embodiment, the controller 40 upon determining at the end of operation 117 that D2 > D1 (or D), calculates an additional amount of flour to be added to the residual dough in the kneading chamber 20 based on the difference between D2 and D1 (or D). For example, the controller 40 may deploy an algorithm of the form Y = (D2 - X1 + S0^{∗}X1 + C^{∗}(X1+X2)) /(D2+X2), in which Y is the desired moisture content, D2 is the actual weight of the washed dough, X1 is the detected actual weight of the amount of flour, X2 is the weight of the calculated further amount of flour, SO is the estimated fraction of starch removed from the initial amount of flour and C is the moisture content of the flour. As D2 and X1 have been determined with the weight sensor 18, Y has been given in operation 103 and C and SO may be considered constants as previously explained, the only variable in this equation is X2, which therefore can be calculated by the controller 40 with this algorithm. The controller 40 subsequently generates a user instruction with the user interface 14 to instruct a user to add the calculated further amount X2 of flour to the kneading chamber 20, such that this additional amount of flour can be kneaded into the residual dough in operation 123 to form the finalized dough as previously explained. This has the advantage that no additional or unnecessarily complex components need to be present in the dough making apparatus 10 (although they of course may be combined with this embodiment) in order to further reduce the moisture content of the dough after completion of the draining by gravity of excess water from the kneading chamber 20 in operation 117.

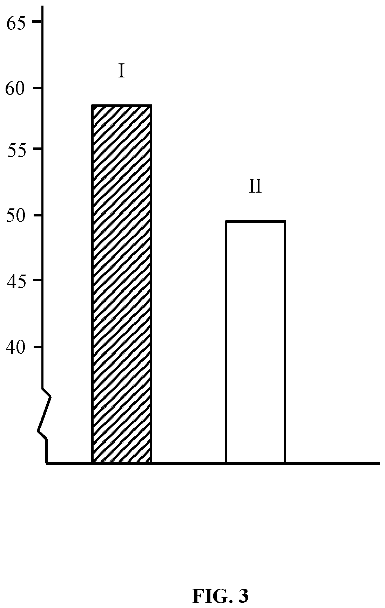

What is more, although it at first glance may seem counterintuitive to add flour to a washed dough when the purpose of the washing step is to reduce carbohydrate (starch) content of the dough, as this adds carbohydrates, it has been found that the overall starch content of such a dough is still significantly lower than that of a dough that has not been washed; this is depicted in FIG. 3, which shows the starch content (weight %) of an unwashed noodle dough (shaded bar) and the starch content (weight %) of the noodle dough washed in accordance with the teachings of the present invention (clear bar) to which a fraction of flour was added after the washing step in order to achieve the desired moisture content in the dough. The washed dough achieved a starch content that was approximately 15% lower than that of the washed dough. Of course, for other types of dough having a higher target moisture content, further reductions in the starch content of such doughs can be expected as smaller (or no) additional amounts of flour need to be added to the residual dough in the kneading chamber 20 after completion of the draining operation 117.

Now upon returning to FIG. 2, after finalizing the dough in operation 123, the method 100 may proceed to optional operation 125 in which the finalized dough is extruded with the extruder 24 under control of the controller 40, e.g. to form pasta or noodle shapes. Of course, operation 125 may be skipped in case of the dough being used as a whole to prepare a food product such as a bread or the like. The method 100 subsequently terminates in operation 127.

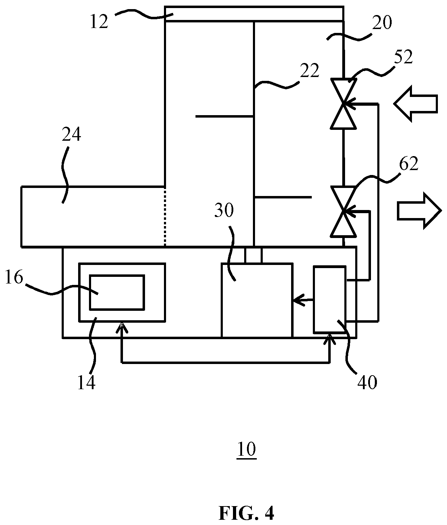

FIG. 4 schematically depicts a cross-sectional view of a dough making apparatus 10 according to another embodiment of the present invention. In this embodiment, the kneading chamber 20 further comprises a controllable inlet valve 52 under control of the controller 40, which may be switched by the controller between an open position in which water can be added to the kneading chamber 20 as indicated by the block arrow pointing at the controllable inlet valve 52 and a closed position in which such a water supply is cut off. The controllable inlet valve 52 may be fluidly coupled to a water supply such as a mains water supply such that the introduction of the amount of water to form the initial dough in operation 109 and/or the introduction of the additional amount of water to wash the initial dough in operation 113 as previously described can be accurately controlled by the controller 40 through operation of the controllable inlet valve 52. The addition of the correct amount of water in these operations may be determined in any suitable manner, for example by weighing the introduced amount of water with the weight sensor 18 or by the inclusion of a flow sensor (not shown) communicatively coupled to the controller 40 in the fluid line connected to the controllable inlet valve 52 through which the amount of water introduced into the kneading chamber 20 can be accurately determined.

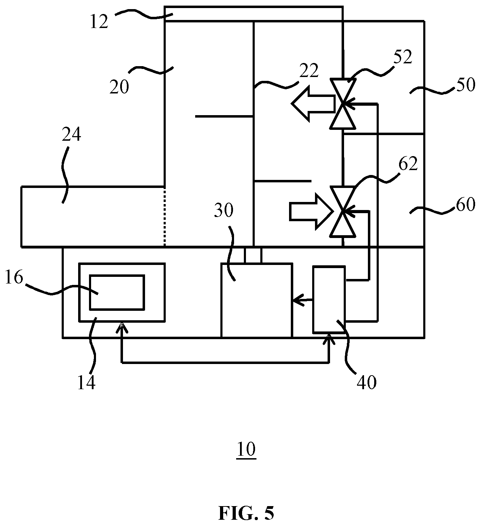

FIG. 5 schematically depicts a cross-sectional view of a dough making apparatus 10 according to yet another embodiment of the present invention. In this embodiment, the dough making apparatus 10 further comprises a first water tank 50 in fluid communication with the controllable inlet valve 52 and a second water tank 60 in fluid communication with the controllable outlet valve 62. The first water tank 50 may hold a volume of water that can be added to the kneading chamber 20 as previously explained in more detail with the aid of FIG. 4, whereas the second water tank 60 may hold a volume of waste water that is drained from the kneading chamber 20 in previously described operation 117. The inclusion of the first water tank 50 and the second water tank 60 has the advantage that the dough making apparatus 10 may be used as a standalone device without having to be connected to a water supply and/or a water waste. It should be understood that although it is preferred that in this embodiment the dough making apparatus 10 comprises both the first water tank 50 and the second water tank 60, alternative embodiments in which only one of the first water tank 50 and the second water tank 60 is present are equally feasible although less preferred.

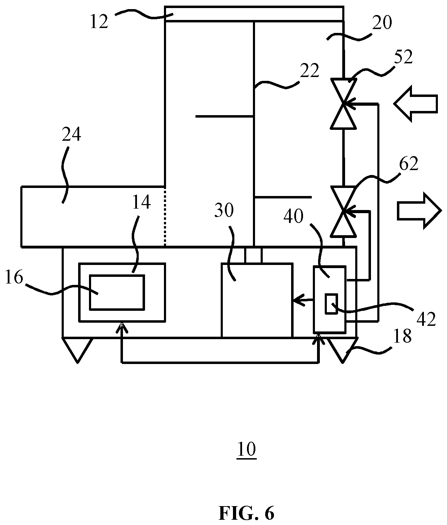

FIG. 6 schematically depicts a cross-sectional view of a dough making apparatus 10 according to still another embodiment of the present invention. In this embodiment, the dough making apparatus 10 further comprises a data storage device 42, which may take any suitable shape, such as a programmable memory device or the like. The data storage device 42 may form part of the controller 40 or may be a separate entity to the controller 40. The controller 40 is communicatively coupled to the data storage device 42. The data storage device 42 may store a list of types of dough and a desired moisture content for each of the listed types of dough, e.g. in the form of a lookup table or the like. As previously explained, the user interface 14 may comprise a plurality of selection options, with each selection option corresponding to a particular type of dough that a user may select as the type of dough to be made with the dough making apparatus 10. Each of these selectable types of dough with the user interface 14 are also present in the data storage device 42 such that the controller 40 can access the data storage device 42 to retrieve the desired moisture content of a type of dough selected by a user from the plurality of selection options with the user interface 14 by matching the user-selected dough to an entry in the data storage device 42 and retrieving the moisture content associated with this entry from the data storage device 42. Of course, it should be understood that this is an example embodiment only and that many other suitable ways of providing the controller 40 with the desired moisture content of the dough to be made with the dough making apparatus 10 will be immediately apparent to the skilled person, and that these other suitable ways are also considered to be covered by the teachings of the present invention.

The dough making apparatus 10 typically is a kitchen appliance for use in a domestic or commercial kitchen. The dough making apparatus 10 may be any type of apparatus in which dough is processed or formed. For example, the dough making apparatus 10 may be one or more of a bread maker, a pie maker, a pasta maker, a noodle maker, and so on.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A dough making apparatus (10) comprising:
a kneading chamber (20) including a controllable water outlet (62) and a kneading arm (22) driven by a motor (30);
a controller (40) arranged to control said motor and water outlet; **characterized by**
a weight sensor (18) coupled to the controller for determining the weight of the contents of the kneading chamber; and
a user interface (14) communicatively coupled to the controller, wherein the controller is adapted to:
receive (103) a user input with the user interface indicative of a desired moisture content of a dough to be made;
detect (105) the weight of an amount of flour added to the kneading chamber with said weight sensor;
calculate (107) a target weight of said dough based on its desired moisture content from the detected actual weight of said flour and an estimated reduction in the starch content of said flour caused by washing said dough with an additional amount of water;
control (111) said motor to engage the kneading arm such as to form a dough from the mixture of said amount of flour and an amount of water added to said kneading chamber and subsequently wash the dough with the additional amount of water added to the kneading chamber to reduce its starch content;
control (117) the controllable water outlet to drain excess water comprising said starch from the kneading chamber after said washing to leave behind the washed dough in the kneading chamber and detect (119) the actual weight of the washed dough with the weight sensor during said draining;
if said actual weight of the washed dough reaches the target weight, end the draining; and
subsequently control (123) said motor to engage the kneading arm to finalize the dough.

2. The dough making apparatus (10) of claim 1, in which the controller (40) is adapted to calculate the target weight of the dough using an algorithm of the form Y = (D1 - X1 + S0^{∗}X1 + C^{∗}X1) /D1, in which Y is the desired moisture content, D1 is the target weight, X1 is the detected actual weight of the amount of flour, SO is an estimated fraction of starch removed from said flour and C is the moisture content of said flour.

3. The dough making apparatus (10) of claim 1 or 2, in which the controller (40) is further adapted to, if the actual weight of the washed dough is larger than the target weight:
calculate a further amount of flour to be added to the washed dough;
generate a user instruction with the user interface (14) instructing the user to add the further amount of flour to the kneading chamber (20); and
control (123) said motor to engage the kneading arm to finalize the dough by kneading the further amount of flour into the dough.

4. The dough making apparatus (10) of claim 3, in which the controller (40) is adapted to calculate the further amount of flour using an algorithm of the form Y = (D2 - X1 + S0^{∗}X1 + C^{∗}(X1+X2)) /(D2+X2), in which Y is the desired moisture content, D2 is the actual weight of the washed dough, X1 is the detected actual weight of the amount of flour, X2 is the weight of the calculated further amount of flour, SO is an estimated fraction of starch removed from said flour and C is the moisture content of said flour.

5. The dough making apparatus (10) of any of claims 1-4, wherein the controller (40) is further adapted to:
calculate the amount of water forming the dough based on the detected actual weight of amount of flour, wherein the weight of the calculated amount of water is 0.4-2.0 times the detected actual weight of amount of flour, preferably wherein the weight of the calculated amount of water is 0.5-0.8 times the detected actual weight of the amount of flour; and
generate a user instruction with the user interface (14) to instruct a user to add the calculated amount of water to the kneading chamber (20).

6. The dough making apparatus (10) of any of claim 1-5, wherein the controller (40) is further adapted to:
calculate the additional amount of water based on the detected actual weight of amount of flour, wherein the weight of the additional amount of water is 1.0-5.0 times the detected actual weight of the amount of flour, preferably wherein the weight of the additional amount of water is 2.0-4.0 times the detected actual weight of the amount of flour; and
generate a user instruction with the user interface (14) to instruct a user to add the calculated additional amount of water to the kneading chamber (20).

7. The dough making apparatus (10) of any of claim 1-6, wherein the controller (40) is further adapted to:
receive (103) a user input with the user interface indicative of a desired weight of a dough to be made;
calculate an amount of said flour to be added using an algorithm of the form Y = (D - X + S0^{∗}X + C^{∗}X) /D, in which Y is the desired moisture content, D is the desired weight of dough, X is the weight of the amount of flour to be added, SO is an estimated fraction of starch removed from said flour and C is the moisture content of said flour; and generate a user instruction with the user interface (14) to instruct a user to add the calculated amount of flour to the kneading chamber (20).

8. The dough making apparatus (10) of any of claims 1-7, wherein the controller (40) is adapted to control (115) said motor to engage the kneading arm to wash the dough with the additional amount of water for a period of 1-20 minutes, preferably for a period of 5-10 minutes.

9. The dough making apparatus (10) of any of claims 1-8, wherein the controller (40) is adapted to control (123) said motor to engage the kneading arm to finalize the dough for a period of 1-15 minutes, preferably for a period of 1-5 minutes.

10. The dough making apparatus (10) of any of claims 1-9, further comprising a data storage device (42) communicatively coupled to the controller (40), said data storage device storing a list of types of dough and a desired moisture content for each of the listed types of dough, wherein:
the user interface (14) comprises a plurality of selection options, each selection option corresponding to one of said types of dough; and
the controller is adapted to access the data storage device to retrieve the desired moisture content of a type of dough selected by a user from the plurality of selection options.

11. The dough making apparatus (10) of any of claims 1-10, further comprising a controllable water inlet (52) into the kneading chamber (20) under control of the controller (40), wherein the controller is further adapted to generate a water inlet control instruction to cause the adding of the amount of water and/or the additional amount of water to the kneading chamber.

12. A method (100) of preparing dough having a reduced starch content with a kitchen appliance (10) comprising a kneading chamber (20) including a kneading arm (22) driven by a motor (30), **characterized by** the method comprising:
receiving (103) a user input with the kitchen appliance indicative of a desired moisture content of a dough to be made;
determining (105) the weight of an amount of flour added to the kneading chamber;
calculating (107) a target weight of said dough based on its desired moisture content from the determined weight of said flour and an estimated reduction in the starch content of said flour caused by washing said dough with an additional amount of water;
controlling (111) said motor to engage the kneading arm such as to form a dough from the mixture of said amount of flour and an amount of water added to said kneading chamber;
washing (115) the dough with the additional amount of water added to the kneading chamber to reduce its starch content;
draining (117) excess water comprising said starch from the kneading chamber after said washing to leave behind the washed dough in the kneading chamber and
determining (119) the actual weight of the washed dough during said draining, and:
if said actual weight matches the target weight, controlling (123) said motor to engage the kneading arm to finalize the dough.

13. The method (100) of claim 12, in which said calculating the target weight of the dough comprises using an algorithm of the form Y = (D1 - X1 + S0^{∗}X1 + C^{∗}X1) /D1, in which Y is the desired moisture content, D1 is the target weight, X1 is the weight of the amount of flour, SO is an estimated fraction of starch removed from said flour and C is the moisture content of said flour.

14. The method (100) of claim 12 or 13, further comprising, if the actual weight of the washed dough is larger than the target weight:
calculating a further amount of flour to be added to the washed dough;
generating a user instruction with the user interface (14) instructing the user to add the further amount of flour to the kneading chamber (20); and
controlling (123) said motor to engage the kneading arm to finalize the dough by kneading the further amount of flour into the dough.

15. The method (100) of claim 14, in which calculating the further amount of flour comprises using an algorithm of the form Y = (D2 - X1 + S0^{∗}X1 + C^{∗}(X1+X2)) /(D2+X2), in which Y is the desired moisture content, D2 is the actual weight of the washed dough, X1 is the detected actual weight of the amount of flour, X2 is the weight of the calculated further amount of flour, SO is an estimated fraction of starch removed from said flour and C is the moisture content of said flour.

## Patentansprüche

1. Apparat zur Teigherstellung (10), der Folgendes umfasst: eine Knetkammer (20) mit einem steuerbaren Wasserauslass (62) und einem von einem Motor (30) angetriebenen Knetarm (22);
eine Steuerung (40), die zur Steuerung des Motors und des Wasserauslasses angeordnet ist; **gekennzeichnet durch**
einen Gewichtssensor (18), der mit dem Steuergerät gekoppelt ist, um das Gewicht des Inhalts der Knetkammer zu bestimmen; und eine Benutzerschnittstelle (14), die kommunikativ mit dem Steuergerät gekoppelt ist, wobei das
Steuergerät geeignet ist: eine Benutzereingabe mit der Benutzerschnittstelle zu empfangen (103), die den gewünschten Feuchtigkeitsgehalt eines herzustellenden Teigs angibt; das Gewicht einer der Knetkammer hinzugefügten Mehlmenge mit dem Gewichtssensor zu erfassen (105);
ein Zielgewicht des Teigs auf der Grundlage seines gewünschten Feuchtigkeitsgehalts aus dem erfassten tatsächlichen Gewicht des Mehls und einer geschätzten Verringerung des Stärkegehalts des Mehls zu berechnen (107), die durch das Waschen des Teigs mit einer zusätzlichen Menge Wasser verursacht wird; Steuern (111) des Motors, um den Knetarm so in Eingriff zu bringen, dass ein Teig aus der Mischung der Mehlmenge und einer der Knetkammer hinzugefügten Wassermenge gebildet wird, und anschließendes Waschen des Teigs mit der der Knetkammer hinzugefügten zusätzlichen Wassermenge, um seinen Stärkegehalt zu verringern; Steuern (117) des steuerbaren Wasserauslasses, um das Stärkeenthaltene überschüssige Wasser, nach dem Waschen aus der Knetkammer abzulassen, um den gewaschenen Teig in der Knetkammer zurückzulassen, und Erfassen (119) des tatsächlichen Gewichts des gewaschenen Teigs mit dem Gewichtssensor während des Ablassens; das Ablassen beenden, wenn das tatsächliche Gewicht des gewaschenen Teigs das Zielgewicht erreicht; und
anschließend den Motor zu steuern (123), um den Knetarm in Eingriff zu bringen und den Teig fertigzustellen.

2. Apparat zur Teigherstellung (10) nach Anspruch 1, bei dem die Steuerung (40) so ausgelegt ist, dass sie das Zielgewicht des Teigs unter Verwendung eines Algorithmus der Form Y = (D1 - X1 + S0*X1 + C*X1) /D1 berechnet, wobei Y der gewünschte Feuchtigkeitsgehalt ist, D1 das Zielgewicht ist, X1 das ermittelte tatsächliche Gewicht der Mehlmenge ist, S0 ein geschätzter Anteil der
aus dem Mehl entfernten Stärke ist, und C der Feuchtigkeitsgehalt des Mehls ist.

3. Apparat zur Teigherstellung (10) nach Anspruch 1 oder 2, bei der die Steuerung (40) ferner dazu ausgelegt ist, eine zusätzliche Mehlmenge zu berechnen, die dem gewaschenen Teig zuzugeben ist, wenn das tatsächliche Gewicht des gewaschenen Teigs größer ist als das Sollgewicht;
Erzeugen einer Benutzeranweisung mit der Benutzerschnittstelle (14), die den Benutzer anweist, die weitere Mehlmenge in die Knetkammer (20) zu geben; und Steuern (123) des Motors, um den Knetarm in Eingriff zu bringen, damit der Teig durch Kneten der zugegebenen Mehlmenge in den Teig fertiggestellt wird.

4. Apparat zur Teigherstellung (10) nach Anspruch 3, bei der die Steuerung (40) so ausgelegt ist, dass sie die weitere Mehlmenge unter Verwendung eines Algorithmus der Form Y = (D2 - X1 + S0*X1 + C*(X1+X2)) /(D2+X2)) umfasst, wobei Y der gewünschte Feuchtigkeitsgehalt, D2 das tatsächliche Gewicht des gewaschenen Teigs, X1 das ermittelte tatsächliche Gewicht der Mehlmenge, X2 das Gewicht der berechneten weiteren Mehlmenge, S0 ein geschätzter Anteil der aus dem Mehl entfernten Stärke ist, und C der Feuchtigkeitsgehalt des Mehls ist.

5. Apparat zur Teigherstellung (10) nach einem der Ansprüche 1-4, wobei die Steuerung (40) des Weiteren so ausgelegt ist, dass sie:
die Wassermenge, die den Teig bildet, basierend auf der ermittelten tatsächlichen
Mehlmenge berechnet, wobei das Gewicht der berechneten Wassermenge das 0,4-2,0-fache des ermittelten tatsächlichen Gewichts der Mehlmenge beträgt, wobei das Gewicht der berechneten Wassermenge vorzugsweise das 0,5-0,8 fache des ermittelten tatsächlichen Gewichts der Mehlmenge beträgt;
und
eine Benutzeranweisung mit der Benutzerschnittstelle (14) erzeugt, um einen Benutzer anzuweisen,
die berechnete Wassermenge in die Knetkammer (20) zu geben.

6. Apparat zur Teigherstellung (10) nach einem der Ansprüche 1 bis 5, wobei die Steuerung (40) des Weiteren dazu ausgelegt ist:
die zusätzliche Wassermenge basierend auf dem ermittelten tatsächlichen Gewicht der Mehlmenge zu berechnen, wobei das Gewicht der zusätzlichen Wassermenge das 1,0-5,0 fache des ermittelten tatsächlichen Gewichts der Mehlmenge beträgt, wobei das Gewicht der zusätzlichen Wassermenge vorzugsweise das 2,0-4,0 fache des ermittelten tatsächlichen Gewichts der Mehlmenge beträgt; und
eine Benutzeranweisung mit der Benutzerschnittstelle (14) zu erstellen, um einen Benutzer anzuweisen, die berechnete zusätzliche Wassermenge in die Knetkammer (20) zu geben.

7. Apparat zur Teigherstellung (10) nach einem der Ansprüche 1 bis 6, wobei die Steuerung (40) des Weiteren dazu ausgelegt ist:
eine Benutzereingabe mit der Benutzerschnittstelle zu empfangen (103), die ein gewünschtes Gewicht eines herzustellenden Teigs anzeigt;
eine Menge des hinzuzufügenden Mehls unter Verwendung eines Algorithmus der Form Y = (D - X + S0*X + C*X) /D zu berechnen, wobei Y der gewünschte Feuchtigkeitsgehalt ist, D das gewünschte Gewicht des Teigs ist, X das Gewicht der hinzuzufügenden Mehlmenge ist, S0 ein geschätzter Anteil der aus dem Mehl entfernten Stärke ist und C der Feuchtigkeitsgehalt des Mehls ist; und eine Benutzeranweisung mit der Benutzerschnittstelle (14) zu erzeugen, um einen Benutzer anzuweisen, die berechnete Mehlmenge in die Knetkammer (20) zu geben.

8. Apparat zur Teigherstellung (10) nach einem der Ansprüche 1 bis 7, wobei die Steuerung (40) so ausgelegt ist, dass sie den Motor so steuert (115), dass er den Knetarm in Eingriff bringt, um den Teig mit der zusätzlichen Wassermenge für einen Zeitraum von 1 bis 20 Minuten, vorzugsweise für einen Zeitraum von 5 bis 10 Minuten, zu waschen.

9. Apparat zur Teigherstellung (10) nach einem der Ansprüche 1 bis 8, wobei die Steuerung (40) so ausgelegt ist, dass sie den Motor so steuert (123), dass er den Knetarm in Eingriff bringt, um den Teig für einen Zeitraum von 1 bis 15 Minuten, vorzugsweise für einen Zeitraum von 1 bis 5 Minuten, fertig zu stellen.

10. Apparat zur Teigherstellung (10) nach einem der Ansprüche 1 bis 9, der des Weiteren ein Gerät zur Datenspeicherung (42) umfasst, das kommunikativ mit der Steuerung (40) verbunden ist, wobei das Gerät zur Datenspeicherung eine Liste von Teigsorten und einen gewünschten Feuchtigkeitsgehalt für jede der aufgelisteten Teigsorten speichert, wobei die Benutzerschnittstelle (14) eine Vielzahl von Auswahlmöglichkeiten umfasst, wobei jede Auswahlmöglichkeit einer der genannten Teigsorten entspricht; und
das Steuergerät ausgelegt ist, auf das Gerät zuzugreifen, um den gewünschten Feuchtigkeitsgehalt einer von einem Benutzer aus der Vielzahl von Auswahlmöglichkeiten ausgewählten Teigsorte abzurufen.

11. Apparat zur Teigherstellung (10) nach einem der Ansprüche 1 bis 10, der ferner einen steuerbaren Wassereinlass (52) in die Knetkammer (20) unter Steuerung durch die Steuereinheit (40) umfasst, wobei die Steuereinheit des Weiteren so ausgelegt ist, dass sie einen Steuerbefehl für den Wassereinlass erzeugt, um die Zugabe der Wassermenge und/oder der zusätzlichen Wassermenge in die Knetkammer zu veranlassen.

12. Verfahren (100) zum Zubereiten von Teig mit einem reduzierten Stärkegehalt mit einem Küchengerät (10), das eine Knetkammer (20) mit einem von einem Motor (30) angetriebenen Knetarm (22) umfasst, **gekennzeichnet durch** das Verfahren, welches Folgendes umfasst: Empfangen (103) einer Benutzereingabe mit dem Küchengerät, die einen gewünschten Feuchtigkeitsgehalt eines herzustellenden Teigs angibt; Bestimmen (105) des Gewichts einer der Knetkammer zugeführten
Mehlmenge;
Berechnen (107) eines Zielgewichts des Teigs basierend auf seinem gewünschten Feuchtigkeitsgehalt aus dem bestimmten Gewicht des Mehls und einer geschätzten Verringerung des Mehls und einer geschätzten Verringerung des
Stärkegehalts des Mehls, die durch das Waschen des Teigs mit einer zusätzlichen Wassermenge verursacht wird; Steuern (111) des Motors, um den Knetarm so in Eingriff zu bringen, dass ein Teig aus der Mischung der Mehlmenge und einer der Knetkammer zugeführten Wassermenge gebildet wird;
Waschen (115) des Teigs mit der zusätzlichen Wassermenge, die der
Knetkammer zugeführt wird, um seinen Stärkegehalt zu reduzieren; Ablassen (117) des Stärkeenthaltenen überschüssigen Wassers aus der Knetkammer nach dem Waschen, um den gewaschenen Teig in der Knetkammer zurückzulassen, und Bestimmen (119) des tatsächlichen Gewichts des gewaschenen Teigs während des Ablassens, und;
wenn das tatsächliche Gewicht mit dem Zielgewicht übereinstimmt, Steuerung (123) des Motors, um den Knetarm in Eingriff zu bringen, um den Teig fertig zu stellen.

13. Verfahren (100) nach Anspruch 12, bei dem die Berechnung des Zielgewichts des Teigs die Verwendung eines Algorithmus der Form Y = (D1 - X1 + S0*X1 + C*X1) /D1 umfasst,
wobei Y der gewünschte Feuchtigkeitsgehalt ist, D1 das Zielgewicht ist, X1 das Gewicht der Mehlmenge ist, S0 ein geschätzter Anteil der aus dem Mehl entfernten Stärke ist und C der Feuchtigkeitsgehalt des Mehls ist.

14. Verfahren (100) nach Anspruch 12 oder 13, das des Weiteren, wenn das tatsächliche Gewicht des gewaschenen Teigs größer als das Zielgewicht ist, Folgendes umfasst: Berechnen einer weiteren Mehlmenge, die dem gewaschenen Teig zuzusetzen ist; Erzeugen einer Benutzeranweisung mit der Benutzerschnittstelle (14), die den Benutzer anweist, eine weitere Mehlmenge in die Knetkammer (20) zu geben; und
Steuern (123) des Motors, um den Knetarm in Eingriff zu bringen, um den Teig durch Kneten der weiteren dem Teig zugegebenen Mehlmenge fertigzustellen.

15. Verfahren (100) nach Anspruch 14, bei dem die Berechnung der weiteren Mehlmenge die Verwendung eines Algorithmus der Form Y = (D2 - X1 + S0*X1 + C*(X1+X2)) /(D2+X2)) umfasst,
wobei Y der gewünschte Feuchtigkeitsgehalt ist, D2 das tatsächliche Gewicht des gewaschenen Teigs ist, X1 das ermittelte tatsächliche Gewicht der Mehlmenge ist, X2 das Gewicht der berechneten weiteren Mehlmenge ist, S0 ein geschätzter Anteil der aus dem Mehl entfernten Stärke ist und C der Feuchtigkeitsgehalt des Mehls ist.

## Revendications

1. Appareil de fabrication de pâte (10) comprenant:
une chambre de pétrissage (20) incluant une sortie d'eau contrôlable (62) et un bras de pétrissage (22) entraîné par un moteur (30); un contrôleur (40) agencé pour contrôler ledit moteur et la sortie d'eau;
**caractérisé par**
un capteur de poids (18) couplé au contrôleur pour déterminer le poids du contenu de la chambre de pétrissage; et
une interface utilisateur (14) couplée en communication au contrôleur, dans lequel le contrôleur est adapté pour:
recevoir (103) une entrée utilisateur avec l'interface utilisateur indiquant une teneur en humidité souhaitée d'une pâte à fabriquer;
détecter (105) le poids d'une quantité de farine ajoutée à la chambre de pétrissage avec ledit capteur de poids;
calculer (107) un poids cible de ladite pâte sur la base de sa teneur en humidité souhaitée à partir du poids réel détecté de ladite farine et d'une réduction estimée de la teneur en amidon de ladite farine provoquée par le lavage de ladite pâte avec une quantité supplémentaire d'eau;
contrôler (111) ledit moteur pour engager le bras de pétrissage de manière à former une pâte à partir du mélange de ladite quantité de farine et d'une quantité d'eau ajoutée à ladite chambre de pétrissage et ensuite
laver la pâte avec la quantité supplémentaire d'eau ajoutée à la chambre de pétrissage pour réduire sa teneur en amidon;
contrôler (117) la sortie d'eau contrôlable pour drainer l'excès d'eau comprenant ledit amidon de la chambre de pétrissage après ledit lavage pour laisser la pâte lavée dans la chambre de pétrissage et
détecter (119) le poids réel de la pâte lavée avec le capteur de poids pendant ledit drainage;
si ledit poids réel de la pâte lavée atteint le poids cible, terminer le drainage; et
ensuite contrôler (123) ledit moteur pour engager le bras de pétrissage pour finaliser la pâte.

2. Appareil de fabrication de pâte (10) selon la revendication 1, dans lequel le contrôleur (40) est adapté pour calculer le poids cible de la pâte en utilisant un algorithme de la forme Y = (D1 - X1 + S0*X1 + C*X1) / D1, dans lequel Y est la teneur en humidité souhaitée, D1 est le poids cible, X1 est le poids réel détecté de la quantité de farine, S0 est une fraction estimée d'amidon retiré de ladite farine et C est la teneur en humidité de ladite farine.

3. Appareil de fabrication de pâte (10) selon la revendication 1 ou 2, dans lequel le contrôleur (40) est en outre adapté pour, si le poids réel de la pâte lavée est supérieur au poids cible:
calculer une quantité supplémentaire de farine à ajouter à la pâte lavée;
générer une instruction utilisateur avec l'interface utilisateur (14) ordonnant à l'utilisateur d'ajouter la quantité supplémentaire de farine à la chambre de pétrissage (20); et
contrôler (123) ledit moteur pour engager le bras de pétrissage pour finaliser la pâte en pétrissant la quantité supplémentaire de farine dans la pâte.

4. Appareil de fabrication de pâte (10) selon la revendication 3, dans lequel le contrôleur (40) est adapté pour calculer la quantité supplémentaire de farine en utilisant un algorithme de la forme Y = (D2 - X1 + S0*X1 + C*(X1+X2)) / (D2+X2), dans lequel Y est la teneur en humidité souhaitée, D2 est le poids réel de la pâte lavée, X1 est le poids réel détecté de la quantité de farine, X2 est le poids de la quantité supplémentaire calculée de farine, S0 est une fraction estimée d'amidon retiré de ladite farine et C est la teneur en humidité de ladite farine.

5. Appareil de fabrication de pâte (10) selon l'une quelconque des revendications 1-4, dans lequel le contrôleur (40) est en outre adapté pour:
calculer la quantité d'eau formant la pâte sur la base du poids réel détecté de la quantité de farine, dans lequel le poids de la quantité calculée d'eau est de 0,4-2,0 fois le poids réel détecté de la quantité de farine, de préférence dans lequel le poids de la quantité calculée d'eau est de 0,5-0,8 fois le poids réel détecté de la quantité de farine;
et
générer une instruction utilisateur avec l'interface utilisateur (14) pour ordonner à un utilisateur d'ajouter la quantité calculée d'eau à la chambre de pétrissage (20).

6. Appareil de fabrication de pâte (10) selon l'une quelconque des revendications 1-5, dans lequel le contrôleur (40) est en outre adapté pour:
calculer la quantité supplémentaire d'eau sur la base du poids réel détecté de la quantité de farine, dans lequel le poids de la quantité supplémentaire d'eau est de 1,0-5,0 fois le poids réel détecté de la quantité de farine, de préférence dans lequel le poids de la quantité supplémentaire d'eau est de 2,0-4,0 fois le poids réel détecté de la quantité de farine; et
générer une instruction utilisateur avec l'interface utilisateur (14) pour ordonner à un utilisateur d'ajouter la quantité supplémentaire calculée d'eau à la chambre de pétrissage (20).

7. Appareil de fabrication de pâte (10) selon l'une quelconque des revendications 1-6, dans lequel le contrôleur (40) est en outre adapté pour:
recevoir (103) une entrée utilisateur avec l'interface utilisateur indiquant un poids souhaité d'une pâte à fabriquer;
calculer une quantité de ladite farine à ajouter en utilisant un algorithme de la forme Y = (D - X + S0*X + C*X) / D, dans lequel Y est la teneur en humidité souhaitée, D est le poids souhaité de pâte, X est le poids de la quantité de farine à ajouter, S0 est une fraction estimée d'amidon retiré de ladite farine et C est la teneur en humidité de ladite farine; et générer une instruction utilisateur avec l'interface utilisateur (14) pour ordonner à un utilisateur d'ajouter la quantité calculée de farine à la chambre de pétrissage (20).

8. Appareil de fabrication de pâte (10) selon l'une quelconque des revendications 1-7, dans lequel le contrôleur (40) est adapté pour contrôler (115) ledit moteur pour engager le bras de pétrissage pour laver la pâte avec la quantité supplémentaire d'eau pendant une période de 1-20 minutes, de préférence pendant une période de 5-10 minutes.

9. Appareil de fabrication de pâte (10) selon l'une quelconque des revendications 1-8, dans lequel le contrôleur (40) est adapté pour contrôler (123) ledit moteur pour engager le bras de pétrissage pour finaliser la pâte pendant une période de 1-15 minutes, de préférence pendant une période de 1-5 minutes.

10. Appareil de fabrication de pâte (10) selon l'une quelconque des revendications 1-9, comprenant en outre un dispositif de stockage de données (42) couplé en communication au contrôleur (40), ledit dispositif de stockage de données stockant une liste de types de pâte et une teneur en humidité souhaitée pour chacun des types énumérés de pâte, dans lequel:
l'interface utilisateur (14) comprend une pluralité d'options de sélection, chaque option de sélection correspondant à un desdits types de pâte; et
le contrôleur est adapté pour accéder au dispositif de stockage de données pour récupérer la teneur en humidité souhaitée d'un type de pâte sélectionné par un utilisateur parmi la pluralité d'options de sélection.

11. Appareil de fabrication de pâte (10) selon l'une quelconque des revendications 1-10, comprenant en outre une entrée d'eau contrôlable (52) dans la chambre de pétrissage (20) sous le contrôle du contrôleur (40), dans lequel le contrôleur est en outre adapté pour générer une instruction de contrôle d'entrée d'eau pour provoquer l'ajout de la quantité d'eau et/ou de la quantité supplémentaire d'eau à la chambre de pétrissage.

12. Procédé (100) de préparation de pâte ayant une teneur en amidon réduite avec un appareil de cuisine (10) comprenant une chambre de pétrissage (20) incluant un bras de pétrissage (22) entraîné par un moteur (30), **caractérisé par** un procédé consistant à:
recevoir (103) une entrée utilisateur avec l'appareil de cuisine indiquant une teneur en humidité souhaitée d'une pâte à fabriquer;
déterminer (105) le poids d'une quantité de farine ajoutée à la chambre de pétrissage;
calculer (107) un poids cible de ladite pâte sur la base de sa teneur en humidité souhaitée à partir du poids déterminé de ladite farine et d'une réduction estimée de la teneur en amidon de ladite farine provoquée par le lavage de ladite pâte avec une quantité supplémentaire d'eau;
contrôler (111) ledit moteur pour engager le bras de pétrissage de manière à former une pâte à partir du mélange de ladite quantité de farine et d'une quantité d'eau ajoutée à ladite chambre de pétrissage;
laver (115) la pâte avec la quantité supplémentaire d'eau ajoutée à la chambre de pétrissage pour réduire sa teneur en amidon;
drainer (117) l'excès d'eau comprenant ledit amidon de la chambre de pétrissage après ledit lavage pour laisser la pâte lavée dans la chambre de pétrissage et déterminer (119) le poids réel de la pâte lavée pendant ledit drainage, et:
si ledit poids réel correspond au poids cible, contrôler (123) ledit moteur pour engager le bras de pétrissage pour finaliser la pâte.

13. Procédé (100) selon la revendication 12, dans lequel ledit calcul du poids cible de la pâte comprend l'utilisation d'un algorithme de la forme Y = (D1 - X1 + S0*X1 + C*X1) / D1, dans lequel Y est la teneur en humidité souhaitée, D1 est le poids cible, X1 est le poids de la quantité de farine, S0 est une fraction estimée d'amidon retiré de ladite farine et C est la teneur en humidité de ladite farine.

14. Procédé (100) selon la revendication 12 ou 13, consistant en outre à, si le poids réel de la pâte lavée est supérieur au poids cible:
calculer une quantité supplémentaire de farine à ajouter à la pâte lavée;
générer une instruction utilisateur avec l'interface utilisateur (14) ordonnant à l'utilisateur d'ajouter la quantité supplémentaire de farine dans la chambre de pétrissage (20); et
contrôler (123) ledit moteur pour engager le bras de pétrissage pour finaliser la pâte en pétrissant la quantité supplémentaire de farine dans la pâte.

15. Procédé (100) selon la revendication 14, dans lequel le calcul de la quantité supplémentaire de farine comprend l'utilisation d'un algorithme de la forme Y = (D2 - X1 + S0*X1 + C*(X1+X2)) / (D2+X2), dans lequel Y est la teneur en humidité souhaitée, D2 est le poids réel de la pâte lavée, X1 est le poids réel détecté de la quantité de farine, X2 est le poids de la quantité supplémentaire calculée de farine, S0 est une fraction estimée d'amidon retiré de ladite farine et C est la teneur en humidité de ladite farine.
